# FASCICULE DE BREVET EUROPEEN

(11) **EP 3 721 151 B1**
(45) Date de publication et mention de la délivrance du brevet: **05.02.2025**
(21) Numéro de dépôt: 18833086.4
(22) Date de dépôt: 03.12.2018
(51) Int. Cl.: F25B 15/04, F25B 15/06, F25B 17/08, F25B 17/10, F25B 30/04, F28D 20/00, F25B 17/00, F25B 17/02

(54) **PROCÉDÉ ET DISPOSITIF DE RÉCUPÉRATION/REDISTRIBUTION D'ÉNERGIE CALORIFIQUE PAR VOIE THERMOCHIMIQUE ET STATION DE REDISTRIBUTION**
VERFAHREN UND VORRICHTUNG ZUR WIEDERHERSTELLUNG / UMVERTEILUNG VON THERMISCHER ENERGIE DURCH THERMOCHEMISCHEN WEG UND UMVERTEILUNGSSTATION
METHOD AND DEVICE FOR RECOVERING / REDISTRIBING CALORIFIC ENERGY BY THERMOCHEMICAL PATHWAY AND REDISTRIBUTION STATION

(30) Priorité: 04.12.2017 FR 1761605
(43) Date de publication de la demande: 14.10.2020
(73) Titulaire: Faure, Jean-Emmanuel, 31100 Toulouse (FR)
(72) Inventeur: Faure, Jean-Emmanuel, 31100 Toulouse (FR)
(74) Mandataire: BARRE LAFORGUE
(86) Numéro de dépôt international: PCT/FR2018/053075
(87) Numéro de publication internationale: WO 2019/110896

(56) Documents cités:
- JP-A- 2016 008 744
- US-A- 5 816 070

## Description

L'invention concerne un procédé et un dispositif de récupération/redistribution d'énergie calorifique par voie thermochimique, ainsi qu'une station de redistribution d'énergie calorifique par voie thermochimique.

US5816070 décrit un dispositif de production d'énergie à partir d'un brûler alimenté en combustible. La récupération/redistribution d'énergie calorifique sur au moins un premier site, son stockage et son transport vers au moins un deuxième site distant sur lequel cette énergie calorifique peut être redistribuée présente un grand intérêt et a fait l'objet de très nombreuses recherches et propositions. En particulier, on cherche depuis longtemps à pouvoir récupérer de façon rentable à l'échelle industrielle la chaleur, dite chaleur fatale, nécessairement produite sur les sites industriels ou les sites de production de chaleur pour les réseaux de chauffage urbain, pour pouvoir la réutiliser sur d'autres sites qui peuvent être d'autres sites industriels ou des réseaux de chauffage domestique ou autres. L'une des technologies envisageables à cette fin est la voie thermochimique (cf. notamment le rapport d'étude « Étude de valorisation du stockage thermique et du power-to-heat » Ademe/Atee, 14 novembre 2016 pages 6, 9, 199 à 201, 225 et 226). Le stockage thermochimique de chaleur peut également présenter un intérêt dans d'autres applications, notamment pour le stockage d'énergie renouvelable sur un site de production et/ou pendant certaines périodes, puis son transport jusque sur d'autres sites d'utilisation distants et/ou son utilisation pendant d'autres périodes (accumulateurs réversibles ou pompes à chaleur réversibles).

Comme l'indique le rapport d'étude susmentionné, le problème majeur de ce type de solution est celui de sa rentabilité économique à l'échelle industrielle. Or, l'un des points essentiels de cette rentabilité économique est celui du coût du transport du matériau stockant l'énergie calorifique, qui peut s'effectuer de façon discontinue par véhicule terrestre (routes, rails, voies navigables (maritime ou fluviale)). En conséquence, pour atteindre la rentabilité économique, il convient que l'énergie calorifique transportée par chaque véhicule entraîne une économie supérieure au coût total induit par la récupération et la redistribution de cette énergie calorifique, et, par le déplacement de ce véhicule. Or, le poids et le volume transporté par un véhicule terrestre sont nécessairement limités, notamment compte-tenu de contraintes réglementaires. La quantité d'énergie calorifique transportée par un véhicule est donc limitée par le poids total pouvant être transporté par le véhicule et par la densité d'énergie calorifique par kilogramme de matériau transporté stockant l'énergie calorifique. Il convient donc d'optimiser la densité énergétique transportée pour pouvoir atteindre la rentabilité économique, tout en optimisant les processus de récupération et de redistribution d'énergie calorifique.

L'invention vise donc en particulier à résoudre ces problèmes en proposant un procédé et un dispositif de récupération/redistribution d'énergie calorifique avec stockage d'énergie calorifique dans un matériau transporté de façon discontinue par véhicules, ainsi qu'une station de redistribution d'énergie calorifique, qui puissent atteindre la rentabilité économique à l'échelle industrielle.

L'une des solutions les plus prometteuses procurant une densité énergétique importante à température ambiante est celle qui consiste à utiliser un couple formé d'une composition saline d'au moins un sel et d'un solvant liquide volatile. Dès lors, la récupération d'énergie calorifique consiste schématiquement à utiliser l'énergie calorifique à récupérer pour concentrer - notamment cristalliser- et dissocier la composition saline du solvant liquide à partir d'une solution liquide primaire, et la redistribution d'énergie calorifique consiste à évaporer le solvant à pression réduite avec production de froid et dissoudre la composition saline dans le solvant liquide à nouveau condensé avec production de chaleur dans un dispositif réactionnel pour former une solution liquide primaire.

Lorsque le site de redistribution est distant du site de récupération, la solution primaire ainsi formée sur le site de redistribution est transportée depuis le site de redistribution jusque sur le site de récupération. À l'inverse, le solvant liquide et la composition saline dissociés sur le site de récupération sont transportés jusque sur le site de redistribution.

Cela étant, si cette voie thermochimique est prometteuse, l'inventeur a déterminé qu'elle se heurte encore à un obstacle de principe. En effet, le couple composition saline/solvant liquide doit être choisi pour présenter une concentration totale de la solution primaire aussi élevée que possible, puisque cette concentration est directement liée au différentiel de température théorique pouvant être obtenu entre l'évaporateur et le dispositif réactionnel lors de la redistribution d'énergie calorifique. Ce différentiel de température théorique doit être aussi élevé que possible pour permettre une adaptation optimale de la pompe à chaleur thermochimique ainsi formée aux variations de puissance requises par l'utilisation d'énergie calorifique redistribuée.

À l'inverse, l'énergie totale transférée lors de la récupération d'énergie calorifique est proportionnelle à la quantité du solvant liquide évaporée. En conséquence, contrairement à ce que l'on pouvait penser, il s'avère que la densité énergétique du milieu transporté entre le site de redistribution et le site de récupération est proportionnelle à la quantité de solvant liquide transporté. Autrement dit, plus la proportion massique totale en sel par rapport au solvant liquide est faible, plus la densité énergétique transportée est importante.

De même, dans les accumulateurs thermochimiques réversibles ou les pompes à chaleur thermochimiques le volume nécessaire au stockage de la solution saline produite lors de la redistribution d'énergie calorifique (ou décharge) est un critère qui influe sensiblement sur le coût d'installation.

Dans ce contexte, la présente invention vise à proposer un procédé et un dispositif de récupération/redistribution d'énergie calorifique par voie thermochimique ainsi qu'une station de redistribution d'énergie calorifique par voie thermochimique dans lesquels à la fois la densité énergétique de la solution saline stockée -notamment transportée par véhicules- et utilisée lors de la récupération d'énergie calorifique et le différentiel de température théorique pouvant être obtenu entre l'évaporateur et le dispositif réactionnel lors de la redistribution d'énergie calorifique sont optimisés.

Plus particulièrement, l'invention vise à proposer un procédé et un dispositif de récupération/redistribution d'énergie calorifique par voie thermochimique qui puisse atteindre la rentabilité économique à l'échelle industrielle.

Pour ce faire l'invention concerne un procédé de récupération/redistribution d'énergie calorifique par voie thermochimique dans lequel, lors d'une phase de redistribution d'énergie calorifique, sur au moins un site, dit site de redistribution, une solution liquide, dite solution primaire, comprenant une composition, dite composition saline, d'au moins un sel en solution dans un solvant liquide, est formée à une concentration totale Cf,
caractérisé en ce que :
- ladite phase de redistribution d'énergie calorifique comprend une étape de séparation partielle lors de laquelle au moins une partie -notamment l'intégralité- de la solution primaire formée sur un site de redistribution est ensuite soumise sur ledit site de redistribution à au moins une séparation partielle produisant sans consommation d'énergie extérieure :
   ∘ une solution liquide, dite solution déconcentrée, ayant une concentration totale Cd non nulle inférieure à Cf,
   ∘ une composition, dite composition concentrée, ayant une concentration totale supérieure à Cf,
   ∘ et en ce que la solution déconcentrée produite est utilisée lors d'une phase de récupération d'énergie calorifique.

L'invention permet ainsi simultanément de préserver une concentration totale Cf en sel(s) de la solution primaire optimale pour le fonctionnement pour chaque phase de redistribution d'énergie calorifique, tout en limitant néanmoins la concentration totale Cd en sel(s) de la solution déconcentrée qui peut être utilisée ultérieurement lors d'une phase de récupération d'énergie calorifique. Ainsi, il est possible d'augmenter la densité énergétique et la rentabilité du transport de la solution saline (qui est la solution déconcentrée allégée) entre chaque site de redistribution et chaque site de récupération et/ou de diminuer le volume nécessaire au stockage de cette solution saline pour une même quantité d'énergie calorifique pouvant être récupérée à partir de cette solution saline. En effet, la solution déconcentrée présente un volume plus faible que la solution primaire, et le volume stocké de composition saline est réduit. Et il s'avère que cette économie n'est pas du tout négligeable, mais bien au contraire déterminante vis-à-vis de la rentabilité économique à l'échelle industrielle de l'ensemble du procédé et des dispositifs mis en oeuvre.

En outre, il est à noter que la concentration de la solution déconcentrée qui peut être utilisée lors de phases ultérieures de récupération d'énergie calorifique étant plus faible que celle de la solution primaire, cette récupération peut s'effectuer avec une source de chaleur -notamment une source de chaleur fatale ou une source de chaleur en provenance d'énergie solaire- à plus faible température.

Dans certains modes de réalisation conformes à l'invention, la composition concentrée est stockée sur ledit site de redistribution, en particulier pour pouvoir être utilisée lors d'une phase de redistribution d'énergie calorifique.

En outre, dans certains modes de réalisation conformes à l'invention ladite composition concentrée est au moins pour partie recyclée lors d'une phase de redistribution d'énergie calorifique pour former ladite solution primaire sur ledit site de redistribution. En particulier, ladite composition concentrée peut être au moins pour partie recyclée en continu lors de la même phase de redistribution d'énergie calorifique que celle lors de laquelle elle est produite ; et/ou au moins pour partie alternativement stockée puis recyclée lors de la même phase de redistribution d'énergie calorifique que celle lors de laquelle elle est produite ; et/ou au moins pour partie stockée lors de la phase de redistribution d'énergie calorifique lors de laquelle elle est produite, puis recyclée lors d'une phase ultérieure de redistribution d'énergie calorifique, en complément d'une quantité de composition reconcentrée -notamment de composition saline à l'état solide- alimentée en vue de sa dissolution dans une quantité du solvant liquide, notamment déchargée d'un véhicule de transport.

Divers modes de réalisation peuvent être envisagés en ce qui concerne l'étape de séparation partielle permettant de produire la solution déconcentrée et la composition concentrée. Il est possible par exemple de prévoir un dispositif d'osmose inverse de façon à réaliser une séparation partielle par osmose inverse, la composition concentrée étant alors une solution saline à l'état liquide. Néanmoins, dans certains modes de réalisation avantageux conformes à l'invention, l'étape de séparation partielle est une étape de recristallisation partielle de ladite solution primaire. Dans ces modes de réalisation, la composition concentrée est donc une composition saline recristallisée à l'état solide.

Par ailleurs, les choix de chaque sel de ladite composition saline, du solvant liquide, de la concentration Cd de la solution déconcentrée et de la concentration totale Cf de ladite solution primaire peuvent faire l'objet de toutes variantes. Ces choix sont en particulier réalisés pour optimiser d'une part les phases de redistribution d'énergie calorifique, et d'autre part les phases de récupération d'énergie calorifique, selon les applications et les variantes de réalisation.

La concentration totale Cd de ladite solution déconcentrée doit cependant être non nulle pour permettre une récupération d'énergie calorifique effective ultérieurement à partir de cette solution déconcentrée. Cette concentration Cd est aussi faible que possible dans la limite de la production d'une composition concentrée compatible avec sa ré-utilisation ultérieure. Par exemple, si la composition concentrée est une composition saline cristallisée, l'hydratation partielle des sels produits peut empêcher sa ré-utilisation.

En particulier, dans certains modes de réalisation, et notamment lorsque ledit solvant liquide est l'eau, ladite solution déconcentrée est formée à une concentration totale Cd en sel(s) dissout(s) supérieure à 1 g/L, en particulier supérieure à 5 g/L, plus particulièrement supérieure à 100 g/L, par exemple typiquement de l'ordre de 500 g/L à 1500 g/L.

La concentration totale Cf de la solution primaire est quant à elle choisie en fonction du différentiel de température théorique voulu, et peut donc prendre toute valeur, jusqu'à celle correspondant à une fraction massique en sel(s) de cette solution primaire (masse totale de sel(s) / masse totale de la solution) maximale en conservant l'état liquide de la solution primaire (selon sa température).

Par ailleurs, ladite étape de séparation partielle peut comporter une seule opération ou au contraire une pluralité d'opérations successives, de même nature ou de différentes natures. Dans certains modes de réalisation les plus simples, cette étape de séparation partielle est formée uniquement par recristallisation partielle de la solution primaire par refroidissement. Dans d'autres modes de réalisation, rien n'empêche de prévoir que la solution déconcentrée soit formée par plusieurs étages de recristallisation partielle à différentes températures, ou encore par au moins un traitement par osmose inverse, ou autre.

Il est à noter que dans un procédé selon l'invention l'étape de séparation partielle est effectuée à quantité de matière constante, c'est-à-dire que la somme du nombre de moles de la solution déconcentrée et du nombre de moles de la composition concentrée est égale au nombre de moles de ladite partie de solution primaire utilisée lors d'étape de séparation partielle. De même, de ce fait, l'étape de séparation partielle est également effectuée au moins sensiblement à volume constant.

En outre, la concentration totale Cd en sel(s) de la solution déconcentrée issue de l'étape de séparation partielle dépend exclusivement de cette étape. Par exemple, dans les modes de réalisation dans lesquels l'étape de séparation partielle est une étape de recristallisation partielle de ladite solution primaire, les caractéristiques de la solution déconcentrée dépendent des conditions de cette recristallisation partielle.

Une telle recristallisation partielle peut faire l'objet elle-même de diverses variantes de réalisation. Par exemple, il est possible de rajouter un sel tertiaire dans la solution primaire pour entraîner une complexation et une précipitation de sels ; ou un simple refroidissement de la solution primaire à partir d'une source de froid disponible sur le site de redistribution, notamment un évaporateur du site de redistribution comme décrit ci-après ou de l'air atmosphérique extérieur à plus faible température que la solution primaire (par exemple en hiver) ; ou une évaporation partielle du solvant liquide de la solution primaire par une source de chaleur extérieure, par exemple une source de chaleur solaire en été...

Par ailleurs, ladite composition saline peut faire l'objet de toutes variantes de réalisation, et peut être choisie en particulier en fonction du différentiel théorique de température souhaité entre la solution primaire et ledit solvant liquide, par sa dissolution dans le solvant liquide. En particulier, dans certains modes de réalisation avantageux, ladite composition saline est choisie de façon à ce que ladite solution primaire présente, à sa concentration maximale, un différentiel théorique de température d'au moins 1° C, en particulier d'au moins 5° C, plus particulièrement compris entre 10° C et 50° C, voire même compris entre 50° C et 150° C (par exemple avec une composition saline formée de NaOH) .

Dans certains modes de réalisation possibles chaque sel est choisi dans le groupe formé de ZnCl₂, NaOH, LiBr, ZnBr₂, KOH, LiCl, CaBr₂, LiI, CaCl₂, MgCl₂, NaI, Ca(NO₃)₂, Mg(NO₃)₂, NaBr, NH₄No₃, KI, SrCl₂, NaNO₃, NaCl, KCH₃CO₂, K₂CO₃, MnCl₂, NaNO₂. Par ailleurs, cette composition saline peut comporter uniquement un sel, ce qui facilite la mise au point et le fonctionnement de l'invention. Rien n'empêche cependant de prévoir une composition saline formée d'une pluralité de sels distincts.

De même, le solvant liquide peut faire l'objet de très nombreuses variantes de réalisation. Dans certains modes de réalisation préférentiels, ce solvant liquide est un liquide volatile, c'est-à-dire ayant une pression de vapeur saturante non nulle à température ambiante. Dans certains modes de réalisation possibles, le solvant liquide peut être choisi parmi aussi bien les solvants organiques que les solvants inorganiques, parmi aussi bien les solvants polaires que les solvants apolaires. Avantageusement, le solvant liquide peut être choisi parmi les fluides frigorifiques (dont l'eau et l'ammoniac) et les alcools, plus particulièrement parmi l'eau et l'ammoniac. Le solvant liquide le plus simple et le plus économique qui donne de parfaits résultats est l'eau.

Ainsi, dans certains modes de réalisation possibles, ledit solvant liquide est l'eau et ladite composition saline comporte un unique sel soluble dans l'eau. Avantageusement, le sel est alors l'hydroxyde de sodium.

La dissolution de la composition saline dans le solvant liquide s'effectue avec échange de chaleur. En particulier, la mise en solution d'un sel dans un solvant liquide ou dans une solution liquide est le plus souvent une réaction exothermique produisant de la chaleur. De même, la dilution d'une solution saline par incorporation de solvant liquide dans cette solution saline est également le plus souvent une réaction exothermique produisant de la chaleur. À l'inverse, l'évaporation de solvant liquide à partir d'une solution saline ou d'une quantité solvant liquide est une réaction endothermique produisant du froid.

Dans certains modes de réalisation possibles et particulièrement avantageux un procédé selon l'invention est aussi caractérisé en ce que :
- pour former ladite solution primaire :
   ∘ on choisit un solvant liquide volatile,
   ∘ ledit solvant liquide est évaporé dans un évaporateur en dépression sous vide de tiers gaz avec production de froid,
   ∘ la vapeur du solvant délivrée par l'évaporateur est alimentée dans un dispositif réactionnel dans lequel elle est condensée et incorporée dans ladite solution primaire,
   ∘ ladite solution déconcentrée est formée lors de l'étape de séparation partielle par refroidissement et recristallisation partielle de ladite solution primaire à partir de froid produit par l'évaporateur.

L'évaporation du solvant dans l'évaporateur produit du froid qui est utilisé dans ces modes de réalisation pour la recristallisation partielle de la solution primaire pour former ladite solution déconcentrée. De la sorte, la production de cette solution déconcentrée ne consomme pas d'énergie thermique extérieure.

La condensation de la vapeur du solvant dans le dispositif réactionnel pour générer la solution primaire produit de la chaleur. Une telle pompe à chaleur thermochimique ainsi formée peut donc être utilisée pour la production de froid au niveau de l'évaporateur et/ou pour la production de chaud au niveau du dispositif réactionnel.

La solution déconcentrée produite par un procédé selon l'invention est utilisée lors d'une phase de récupération d'énergie calorifique.

Cette phase de récupération peut être mise en oeuvre sur le même site que la phase de redistribution d'énergie calorifique, ce site étant à la fois un site de redistribution et de récupération sur lequel les phases de redistribution et de récupération sont alternées. Tel est le cas par exemple lorsque le procédé mis en oeuvre dans un accumulateur thermochimique réversible permettant de récupérer et de stocker par voie thermochimique de l'énergie solaire, et de redistribuer cette énergie calorifique pour le chauffage et/ou pour le refroidissement d'un milieu, par exemple d'un local.

L'invention trouve cependant des applications particulièrement avantageuses lorsque au moins un site de récupération est distant d'un site de redistribution. Ainsi, dans certains modes de réalisation avantageux de l'invention la solution déconcentrée est transportée par véhicules -notamment par véhicules terrestres (véhicules routiers, véhicules sur rails, véhicules flottants)- depuis ledit site de redistribution vers au moins un site, dit site de récupération, distant de ce site de redistribution. Plus particulièrement, un procédé selon l'invention s'applique avantageusement lorsque que la distance entre le site de récupération et le site de redistribution est comprise entre 1 km et 1000 km, plus particulièrement entre 5 km et 500 km, encore plus particulièrement entre 10 km et 200 km.

Dans certains modes de réalisation d'un procédé selon l'invention, l'évaporateur et/ou le dispositif réactionnel de la pompe à chaleur thermochimique de redistribution d'énergie calorifique ainsi formée ne sont pas contrôlés en température mais sont associés à des échangeurs de chaleur couplés à des sources thermiques distinctes dont l'une au moins est une source thermique de l'utilisateur, par exemple un local à chauffer ou à climatiser ou un volume d'eau à chauffer.

En outre, dans certains modes de réalisation d'un procédé selon l'invention, l'évaporateur et le dispositif réactionnel de la pompe à chaleur thermochimique de redistribution d'énergie calorifique ainsi formée sont reliés par une conduite étanche en une seule et même enceinte close en dépression sous vide de tiers gaz, c'est-à-dire de laquelle ont été évacués tous les gaz à l'exception de la vapeur issue du solvant liquide, la pression régnant dans cette enceinte étant déterminée par la pression de vapeur saturante du solvant à la température à laquelle l'évaporateur et, respectivement, le dispositif réactionnel sont portés spontanément par la mise en oeuvre du procédé. Dans ces modes de réalisation, la solution déconcentrée est délivrée en dépression sous vide de tiers gaz, et avantageusement stockée dans un réservoir en dépression sous vide de tiers gaz faisant partie de ladite enceinte, c'est-à-dire relié par une conduite étanche au dispositif réactionnel.

Dans tout le texte, l'expression « en dépression sous vide de tiers gaz » désigne le fait que tous les gaz (notamment l'air atmosphérique) ont été évacués d'une enceinte, à l'exception des vapeurs dudit solvant liquide volatile générées dans cette enceinte, la pression régnant dans cette enceinte étant déterminée par la pression vapeur saturante de ce solvant liquide à la température à laquelle il est placé dans enceinte.

Dans ces modes de réalisation où la pompe à chaleur thermochimique du site de redistribution est une enceinte en dépression sous vide de tiers gaz, la solution déconcentrée est aussi avantageusement transportée dans un réservoir qui est également en dépression sous vide de tiers gaz (c'est-à-dire duquel ont été évacués tous les gaz à l'exception de la vapeur de ladite solution déconcentrée, la pression régnant dans ce réservoir étant déterminée par la pression de vapeur saturante de la solution déconcentrée à la température à laquelle elle est portée dans le réservoir), au moins sensiblement à la même pression que ladite enceinte. Cela étant, rien n'empêche au contraire de prévoir que la solution déconcentrée soit au contraire transportée à pression atmosphérique.

Par ailleurs, il est à noter que l'invention permet des économies de transport non seulement pour le transport de la solution depuis un site de redistribution vers un site de récupération, mais également en sens inverse pour le transport des compositions résultant de la phase de récupération, depuis un site de récupération vers un site de redistribution. Ainsi, dans certains modes de réalisation avantageux un procédé selon l'invention est aussi caractérisé en ce que lors d'une phase de récupération d'énergie calorifique sur au moins un site de récupération :
- ladite solution déconcentrée est évaporée par absorption de chaleur en provenance d'une source de chaleur de façon à produire une vapeur dudit solvant et une composition, dite composition reconcentrée, ayant une concentration totale supérieure à Cd -notamment supérieure à Cf-,
- ladite vapeur du solvant est condensée pour produire ledit solvant liquide,
- ledit solvant liquide et ladite composition reconcentrée ainsi formés sur un site de récupération sont transportés sur au moins un site de redistribution.

Ainsi, dans un procédé selon l'invention, lors d'une phase de récupération d'énergie calorifique, de l'énergie calorifique est récupérée par évaporation de solvant de ladite solution déconcentrée. Par ailleurs, dans certains modes de réalisation avantageux une phase de récupération d'énergie calorifique est effectuée sur un site de récupération par une pompe à chaleur thermochimique en dépression sous vide de tiers gaz. Ainsi, dans ces modes de réalisation, lors d'une phase de récupération d'énergie calorifique ladite solution déconcentrée est évaporée dans un évaporateur clos en dépression sous vide de tiers gaz (c'est-à-dire duquel ont été évacués tous les gaz à l'exception de la vapeur issue de ladite solution déconcentrée, la pression régnant dans l'évaporateur étant déterminée par la pression de vapeur saturante de la solution déconcentrée à la température à laquelle elle est portée dans l'évaporateur), ladite vapeur est condensée dans un condenseur clos en dépression sous vide de tiers gaz (c'est-à-dire à la même pression que l'évaporateur) relié par une conduite étanche en dépression à l'évaporateur, et le liquide ainsi condensé et la composition reconcentrée -notamment sous forme de la composition saline à l'état solide- sont transportés dans des réservoirs séparés en dépression sous vide de tiers gaz (c'est-à-dire au moins sensiblement à la même pression que l'évaporateur).

Dans les modes de réalisation où la pompe à chaleur thermochimique sur le site de redistribution et la pompe à chaleur thermochimique sur le site de récupération sont toutes deux en dépression sous vide de tiers gaz, les véhicules transportant des compositions dans un sens et dans l'autre entre ces deux sites dans des réservoirs en dépression sous vide de tiers gaz, l'ensemble du procédé se déroule donc en dépression sous vide de tiers gaz, c'est-à-dire sans rupture de cette dépression. Cela étant, rien n'empêche au contraire de prévoir que l'une au moins de ces compositions soit transportée à pression atmosphérique, et replacée en dépression sous vide de tiers gaz lors de son incorporation dans l'une ou l'autre des pompes à chaleur thermochimiques.

Par ailleurs, il est à noter qu'un procédé selon l'invention peut être mis en oeuvre aussi bien de façon discontinue que de façon continue.

Dans les modes de réalisation où il est mis en oeuvre de façon discontinue, une quantité de solution primaire étant formée lors d'une première phase de redistribution d'énergie calorifique, une quantité correspondante de solution déconcentrée et une quantité correspondante de composition concentrée sont également formées lors de cette première phase de redistribution, puis cette quantité de solution déconcentrée est utilisée lors d'une phase de récupération d'énergie calorifique ultérieure et cette quantité de composition concentrée est utilisée lors d'une phase de redistribution d'énergie calorifique ultérieure.

Dans les modes de réalisation dans lesquels le procédé est mis en oeuvre en continu, la redistribution d'énergie calorifique sur un site de redistribution s'effectue en continu sans interruption de la phase de redistribution, la solution primaire, la solution déconcentrée et la composition concentrée étant formées en continu. Dans les modes de réalisation dans lesquels la solution déconcentrée est transportée par véhicule(s), elle peut être extraite en discontinue du dispositif de stockage où elle est produite en continu. Il suffit en effet que le volume de ce dispositif de stockage soit suffisant. Il peut être prévu par exemple au moins deux réservoirs de stockage différents utilisés alternativement, l'un pour recevoir la solution déconcentrée produite en continu, l'autre pour la déconnexion du réservoir et le chargement sur un véhicule de ce réservoir plein ou le déchargement d'un véhicule d'un réservoir vide et sa reconnexion au dispositif de séparation partielle.

Selon un aspect particulier l'invention concerne également un procédé de récupération d'énergie calorifique sous forme thermochimique sur au moins un site de récupération d'énergie calorifique, et de redistribution, sur au moins un site de redistribution distant de chaque site de récupération, de cette énergie calorifique stockée sous forme thermochimique, dans lequel :
- pour la récupération d'énergie calorifique sur un site de récupération :
   ∘ une solution liquide, dite solution déconcentrée, contenant une concentration totale Cd en au moins un sel dissous dans un solvant liquide, est placée dans un évaporateur au contact d'une source de chaleur du site de récupération de façon à produire une vapeur dudit solvant liquide et une composition, dite composition reconcentrée, ayant une concentration totale supérieure à Cd,
   ∘ ladite vapeur du solvant liquide est condensée dans un condenseur pour produire ledit solvant liquide,
   ∘ ledit solvant liquide et ladite composition reconcentrée ainsi formés sont transportés sur au moins un site de redistribution,
- pour la redistribution d'énergie calorifique sur un site de redistribution :
   ∘ ledit solvant liquide est évaporé dans un évaporateur en dépression sous vide de tiers gaz avec production de froid,
   ∘ la vapeur délivrée par l'évaporateur est condensée dans un dispositif réactionnel et incorporée dans une solution liquide, dite solution primaire, à une concentration totale Cf avec production de chaleur,
- au moins une partie de ladite solution primaire est ensuite refroidie au moins pour partie par le froid produit par l'évaporateur de façon à partiellement recristalliser cette solution primaire et à produire une solution liquide saline, dite solution déconcentrée à une concentration totale Cd inférieure à la concentration totale Cf de la solution primaire,
- ladite solution déconcentrée est transportée depuis le site de redistribution sur au moins un site de récupération.

L'invention s'étend à une station de redistribution d'énergie calorifique par voie thermochimique adaptée pour la mise en oeuvre d'un procédé selon l'invention.

Elle concerne donc également une station de redistribution d'énergie calorifique par voie thermochimique située sur un site, dit site de redistribution, comprenant un dispositif, dit dispositif réactionnel, apte à former, lors d'une phase de redistribution d'énergie calorifique, une solution liquide, dite solution primaire, comprenant une composition, dite composition saline, d'au moins un sel en solution dans un solvant liquide à une concentration totale Cf,
caractérisée en ce qu'elle comprend un dispositif, dit dispositif de séparation partielle, relié au dispositif réactionnel pour pouvoir recevoir au moins une partie de ladite solution primaire, et adapté pour pouvoir produire à partir de cette solution primaire sans consommation d'énergie extérieure :
- une solution liquide, dite solution déconcentrée, à une concentration totale Cd non nulle inférieure à Cf,
- une composition, dite composition concentrée, ayant une concentration totale supérieure à Cf.

Une station de redistribution selon l'invention peut faire l'objet de différentes variantes et différents modes de réalisation, notamment pour la mise en oeuvre des différentes variantes et différents modes de réalisation mentionnés ci-dessus ou ci-après du procédé selon l'invention.

En particulier, ladite solution déconcentrée peut être formée en continu, recyclée en continu dans un autre processus et/ou évacuée en continu de la station. Néanmoins, dans certains modes de réalisation avantageux conformes à l'invention, la station comprend un dispositif de stockage de ladite solution déconcentrée.

En outre, dans certaines applications, une station de redistribution selon l'invention peut également faire office de station de récupération d'énergie calorifique, la récupération d'énergie calorifique et la redistribution d'énergie calorifique étant mises en oeuvre sur un même site.

Néanmoins, dans certains modes de réalisation avantageux conformes à l'invention, le dispositif de stockage est adapté pour permettre le chargement d'au moins un véhicule de transport par une quantité de ladite solution déconcentrée, en vue de son transport depuis ledit site de redistribution vers au moins un site, dit site de récupération, distant dudit site de redistribution.

En outre, dans certains modes de réalisation avantageux conformes à l'invention le dispositif de séparation partielle est un dispositif de recristallisation partielle sur ledit site de redistribution d'au moins une partie de ladite solution primaire, ce dispositif de recristallisation partielle étant apte à produire sur ledit site de redistribution, à partir d'au moins une partie de ladite solution primaire, ladite solution déconcentrée, et ladite composition concentrée sous forme d'une composition solide recristallisée.

Par ailleurs, dans certains modes de réalisation avantageux conformes à l'invention :
- la station de redistribution d'énergie calorifique comprend un évaporateur en dépression sous vide de tiers gaz adapté pour être alimenté par ledit solvant liquide et pour délivrer une vapeur de ce solvant avec production de froid,
- le dispositif de recristallisation partielle comprend un dispositif d'échange calorifique adapté pour soumettre ladite solution primaire au froid produit par l'évaporateur de façon à former ladite solution déconcentrée par refroidissement et recristallisation partielle.

L'invention s'étend à un dispositif de récupération/redistribution d'énergie calorifique par voie thermochimique adapté pour la mise en oeuvre d'un procédé selon l'invention.

Elle concerne donc également un dispositif de récupération/redistribution d'énergie calorifique par voie thermochimique caractérisé en ce qu'il comprend au moins une station de redistribution selon l'invention.

Elle concerne également un dispositif de récupération/redistribution d'énergie calorifique par voie thermochimique caractérisé en ce qu'il comprend au moins une station de redistribution selon l'invention et au moins une station, dite station de récupération, thermochimique de récupération d'énergie calorifique, comprenant :
- un évaporateur associé en échange calorifique à une source de chaleur, cet évaporateur étant adapté pour pouvoir être alimenté par ladite solution déconcentrée, et pour pouvoir produire une vapeur dudit solvant et une composition, dite composition reconcentrée, ayant une concentration totale supérieure à Cf, avec absorption de chaleur en provenance de ladite source de chaleur,
- un condenseur adapté pour pouvoir être alimenté par ladite vapeur et produire ledit solvant liquide.

Un dispositif de récupération/redistribution d'énergie calorifique par voie thermochimique selon l'invention peut faire l'objet de différentes variantes et différents modes de réalisation, notamment pour la mise en oeuvre des différentes variantes et différents modes de réalisation mentionnés ci-dessus ou ci-après du procédé selon l'invention et/ou d'une station de redistribution selon l'invention.

En particulier, dans certains modes de réalisation au moins une -notamment chaque- station de récupération est située sur un site, dit site de récupération, distant d'au moins un -notamment de chaque- site de redistribution.

Dans certains modes de réalisation, le dispositif selon l'invention comprend au moins un véhicule de transport de ladite solution déconcentrée, dudit solvant liquide et de ladite composition saline. Dans certains modes de réalisation particuliers, un même véhicule de transport est utilisé pour transporter la solution déconcentrée depuis un site de redistribution vers un site de récupération, et pour transporter en sens inverse le solvant liquide et la composition reconcentrée séparés depuis un site de récupération vers un site de redistribution. En effet, le réservoir de transport de la solution déconcentrée peut être utilisé pour le transport de la composition reconcentrée. Et le réservoir contenant le solvant liquide dans ledit sens inverse de transport vers le site de redistribution est vide lors du transport vers le site de récupération.

En outre, dans certains modes de réalisation avantageux chaque station de redistribution comprend une pompe à chaleur thermochimique en dépression sous vide de tiers gaz (c'est-à-dire formée principalement d'une enceinte close de laquelle tous les gaz ont été évacués à l'exception des vapeurs dudit solvant liquide, de la solution primaire, et de la solution déconcentrée), et chaque station de récupération comprend une pompe à chaleur thermochimique en dépression sous vide de tiers gaz (c'est-à-dire formée principalement d'une enceinte close de laquelle tous les gaz ont été évacués à l'exception des vapeurs de la solution déconcentrée et du solvant liquide).

En outre, dans certains modes de réalisation avantageux au moins un -notamment chaque- véhicule de transport du dispositif selon l'invention est un véhicule de transport en dépression sous vide de tiers gaz (c'est-à-dire comprenant au moins une enceinte close de laquelle tous les gaz ont été évacués à l'exception des vapeurs dudit solvant liquide et/ou de la solution déconcentrée).

L'invention concerne également un procédé de récupération/redistribution d'énergie calorifique par voie thermochimique, une station de redistribution d'énergie calorifique par voie thermochimique et un dispositif de récupération/redistribution d'énergie calorifique par voie thermochimique caractérisés, en combinaison ou non, par tout ou partie des caractéristiques structurelles ou fonctionnelles mentionnées ci-dessus ou ci-après. Quelle que soit la présentation formelle qui en est donnée, sauf indication contraire explicite, les différentes caractéristiques structurelles ou fonctionnelles mentionnées ci-dessus ou ci-après ne doivent pas être considérées comme étroitement ou inextricablement liées entre elles, l'invention pouvant concerner l'une seulement de ces caractéristiques, ou une partie seulement de l'une de ces caractéristiques, ou encore tout groupement, combinaison ou juxtaposition de tout ou partie de ces caractéristiques.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
- la figure 1 est un schéma de principe d'un procédé de récupération/redistribution d'énergie calorifique par voie thermochimique selon un mode de réalisation de l'invention dans lequel un site de récupération est distant d'un site de redistribution et des solutions liquides sont transportées par véhicules terrestres entre ces sites,
- la figure 2 est un schéma de principe illustrant une pompe à chaleur et une phase de récupération d'énergie calorifique dans un procédé et un dispositif selon l'invention,
- la figure 3 est un schéma de principe illustrant une pompe à chaleur et une phase de redistribution d'énergie calorifique dans un procédé et un dispositif selon l'invention,
- la figure 4 est un schéma d'une station de redistribution d'énergie calorifique selon un mode de réalisation de l'invention,
- la figure 5 est un schéma illustrant la station de la figure 4 dans un autre état de fonctionnement,
- la figure 6 est un diagramme de Othmer des solutions aqueuses de soude,
- la figure 7 est un schéma d'une station de redistribution d'énergie calorifique faisant également office de station de récupération d'énergie calorifique sur un même site.

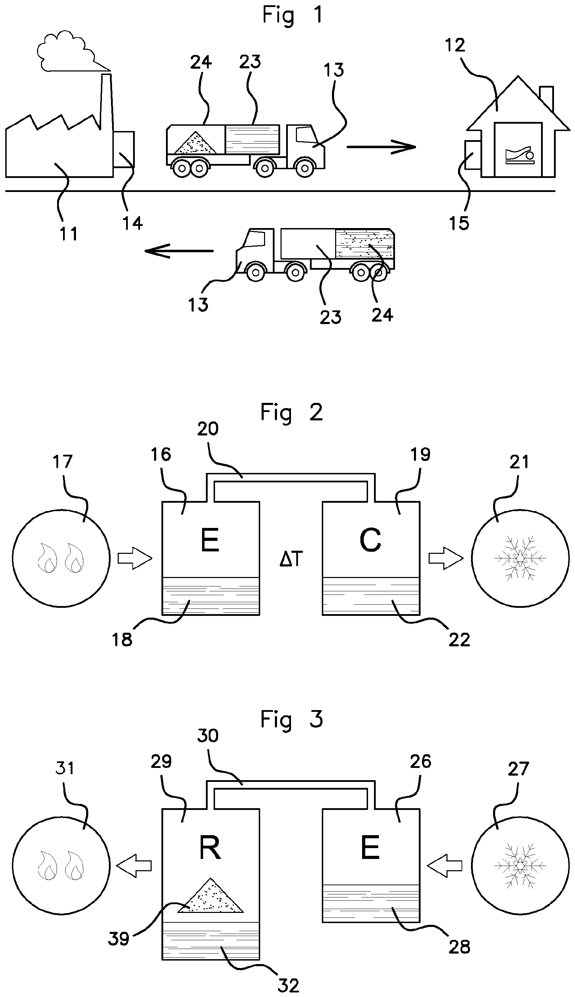

La figure 1 représente un exemple de dispositif de récupération/redistribution d'énergie calorifique par voie thermochimique selon l'invention mettant en oeuvre un procédé de récupération/redistribution d'énergie calorifique par thermochimique selon l'invention entre au moins un site 11 de récupération d'énergie calorifique et au moins un site 12 de redistribution d'énergie calorifique, ces sites 11, 12 étant distants l'un de l'autre, et reliés par au moins une voie de communication permettant le déplacement de véhicules 13 entre eux. Par exemple, la distance séparant les deux sites 11, 12 est comprise entre 1 km et 1000 km, plus particulièrement entre 5 km et 500 km, encore plus particulièrement entre 10 km et 200 km. Dans l'exemple représenté, les véhicules 13 sont des camions, mais tous autres véhicules terrestres (autres véhicule routiers, véhicules sur rails, véhicules flottants) ou non terrestres (véhicules aériens tels que aérostats, drones) pourraient être envisagés.

Le site 11 de récupération est par exemple un site industriel produisant de la chaleur fatale que l'on souhaite pouvoir récupérer et exploiter sur un site 12 de redistribution, qui est par exemple un local à chauffer ou à climatiser.

Le site 11 de récupération comporte une pompe à chaleur 14 thermochimique de récupération, et le site 12 de redistribution comporte une pompe à chaleur 15 thermochimique de redistribution.

La pompe à chaleur 14 de récupération comprend (cf. figure 2) :
- un évaporateur 16 en dépression sous vide de tiers gaz associé à une source chaude 17 de chaleur fatale du site 11 de récupération de façon à permettre un échange de chaleur entre cette source chaude 17 et l'évaporateur 16 ; l'évaporateur 16 est alimenté par une solution 18 liquide saline comprenant une concentration totale Cd non nulle en au moins un sel dissous dans un solvant liquide volatile ;
- un condenseur 19 en dépression sous vide de tiers gaz relié à la sortie de l'évaporateur 16 par une conduite 20 en dépression sous vide de tiers gaz, ce condenseur 19 permettant de condenser la vapeur du solvant volatile issue de l'évaporateur 16 en produisant de la chaleur relarguée dans une source froide 21 qui peut être simplement l'atmosphère extérieure ou une source froide spécifique locale du site 11 de récupération (par exemple un réseau d'eau sanitaire ou de chauffage à réchauffer). Le condenseur 19 contient donc une quantité du solvant liquide volatile 22 pur ainsi recondensé.

L'évaporateur 16, la conduite 20, et le condenseur 19 définissent une seule et même enceinte close en dépression sous vide de tiers gaz.

La concentration totale Cd de la solution saline dans l'évaporateur 16 détermine un différentiel de température théorique ΔT, qui serait celui constaté à l'équilibre entre l'évaporateur 16 et le condenseur 19 si aucun échange de chaleur n'intervenait avec les sources thermiques 17, 21. Dès lors que la différence de température entre la source chaude 17 et la source froide 21 est supérieure à ce différentiel de température théorique ΔT, le solvant liquide de la solution saline 18 s'évapore dans l'évaporateur, passe par la conduite 20, et est alimenté dans le condenseur 19 pour se condenser. La concentration de la solution liquide augmente, et le différentiel de température théorique nécessaire pour continuer l'évaporation augmente.

Cette phase de récupération d'énergie calorifique par voie thermochimique se poursuit dans la pompe à chaleur 14 de récupération tant qu'il reste du solvant liquide dans l'évaporateur 16. À la fin de la phase de récupération d'énergie calorifique si l'évaporation est poursuivie au maximum, tout le solvant liquide susceptible de s'évaporer s'est évaporé, et il ne reste dans l'évaporateur qu'une quantité d'une composition saline, dite composition reconcentrée, qui peut être soit une solution liquide reconcentrée, soit une composition saline recristallisée à l'état solide.

Ces quantités de composition reconcentrée et de solvant liquide pur représentent un potentiel d'énergie calorifique thermochimique et sont transportées dans des réservoirs 23, respectivement 24, séparés sur un camion 13 vers un site 12 de redistribution, sur lequel ils peuvent être utilisés pour exploiter cette énergie calorifique thermochimique lors d'une phase de redistribution grâce à la pompe à chaleur 15 de redistribution. De préférence, ces réservoirs 23, 24 sont maintenus en dépression sous vide de tiers gaz. Ils peuvent être constitués directement de l'évaporateur 16 et, respectivement du condenseur 19, voire même de l'ensemble formé par l'évaporateur 18, le condenseur 19 et la conduite 20 qui les relie, transportés ensemble sur le camion 13. Il est à noter que, dans certains modes de réalisation possibles, il n'est pas nécessaire de charger et décharger les réservoirs du camion 13, ce dernier pouvant être utilisé à titre de dispositif réactionnel de la pompe à chaleur de récupération, et être relié par des dispositifs de connexion pouvant être déconnectés à des échangeurs de chaleur du site de récupération. Dans certains modes de réalisation le camion 13 peut même également incorporer au moins une partie des échangeurs de chaleur utiles sur le site de récupération, de façon à limiter les opérations de connexion/déconnexion.

La pompe à chaleur 15 de redistribution (cf. figure 3) comprend :
- un évaporateur 26 en dépression sous vide de tiers gaz dans lequel le solvant liquide pur 28 apporté par un camion 13 en provenance d'un site 11 de récupération est alimenté, cet évaporateur 26 étant associé à un milieu froid 27 faisant office de source chaude sur le site 12 de redistribution de façon à permettre une absorption par l'évaporateur 26 de chaleur puisée sur cette source chaude 27 permettant l'évaporation du solvant liquide 28 dans l'évaporateur 26 ;
- un dispositif 29 réactionnel en dépression sous vide de tiers gaz relié à la sortie de l'évaporateur 26 par une conduite 30 en dépression sous vide de tiers gaz de façon à recevoir la vapeur produite par l'évaporateur 26 ; ce dispositif 29 réactionnel est alimenté par une quantité de composition reconcentrée -notamment par une quantité de composition saline solide 39- apportée par le camion 13 en provenance du site 11 de récupération simultanément au solvant liquide pur 28 ; le dispositif 29 réactionnel est adapté pour permettre d'une part la recondensation de la vapeur du solvant, et son mélange en solution avec ladite composition reconcentrée pour former une solution liquide, dite solution primaire 32, à une concentration totale Cf.

Le dispositif 29 réactionnel est associé à un milieu chaud 31 faisant office de source froide de façon à permettre un transfert de calories vers cette source froide sous l'effet de la production de chaud résultant d'une part de la condensation de la vapeur, d'autre part de la dilution et/ou de la dissolution intervenant pour former la solution primaire.

Une telle pompe à chaleur 15 de redistribution permet ainsi de refroidir la source chaude 27 et/ou de réchauffer la source froide 31 du fait de la formation de la solution primaire par condensation et dilution et/ou dissolution par incorporation de solvant liquide.

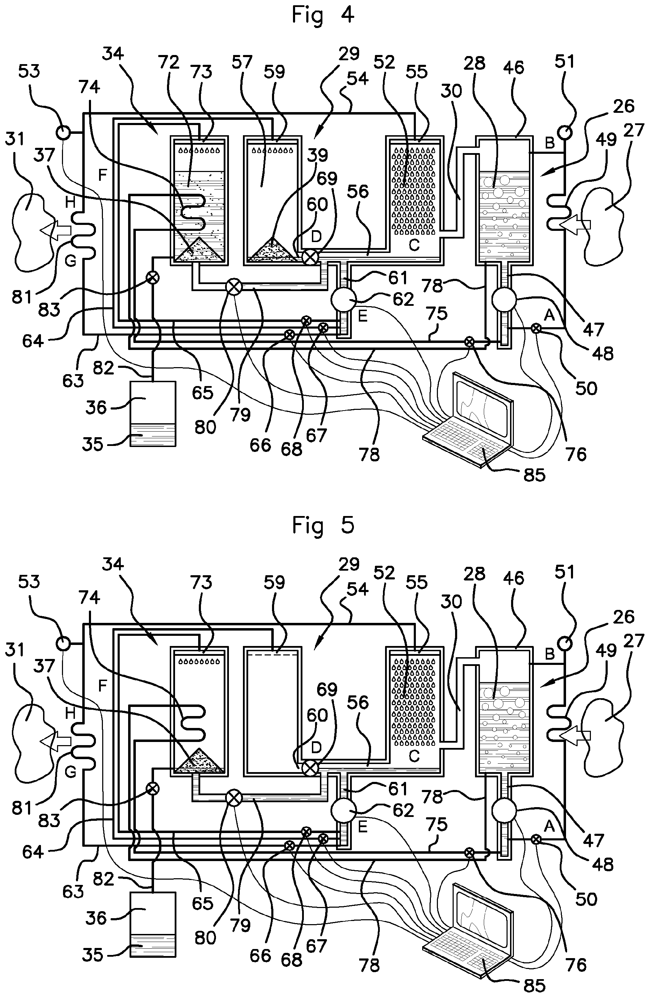

La solution primaire délivrée par le dispositif 29 réactionnel est ensuite soumise à une étape de séparation partielle lors de laquelle elle est partiellement déconcentrée. Pour ce faire, la solution primaire est alimentée à l'entrée d'un dispositif 34 de recristallisation en dépression sous vide de tiers gaz comprenant (Cf. figure 4) un dispositif d'échange de chaleur associé à l'évaporateur 26 de façon à refroidir la solution primaire par le froid produit par l'évaporateur 26 à une température suffisamment basse pour entraîner une recristallisation partielle d'au moins un sel contenu dans la solution primaire.

Le dispositif 34 de recristallisation produit d'une part une solution liquide, dite solution déconcentrée 35, ayant une concentration totale Cd non nulle inférieure à Cf, et qui peut être stockée par exemple dans un réservoir 36 en dépression sous vide de tiers gaz relié au dispositif 34 de recristallisation par une conduite 82 ; d'autre part une quantité de composition concentrée qui est une composition saline à l'état solide, dite composition 37 recristallisée.

Comme on le voit, le dispositif 29 réactionnel fonctionne avec une concentration totale Cf qui est celle de la solution primaire 32 produite, qui définit la différence de température maximale qui peut être produite entre le dispositif 29 réactionnel et l'évaporateur 26, et donc entre les sources 27 chaude et 31 froide.

En revanche, si la composition 37 recristallisée ne contient pas de solvant, la solution 35 déconcentrée contient la même quantité de solvant liquide que la solution primaire mais est à une concentration Cd inférieure à Cf. Cette solution 35 déconcentrée peut être stockée sur le site 12 de redistribution dans le réservoir 36 en dépression sous vide de tiers gaz, et transportée dans ce réservoir 36 en dépression sous vide de tiers gaz d'un camion 13 vers un site 11 de récupération pour faire office de solution 18 saline.

Ainsi, la quantité de solvant liquide transportée depuis un site 12 de redistribution vers un site 11 de récupération par un poids de solution 35 déconcentrée est supérieure à celle qui serait transportée par le même poids de solution 32 primaire, au bénéfice d'une augmentation de la densité massique énergétique transportée. De même, la quantité de solvant liquide transportée depuis un site 12 de redistribution vers un site 11 de récupération par un volume de solution 35 déconcentrée est supérieure à celle qui serait transportée par le même volume de solution 32 primaire, au bénéfice d'une augmentation de la densité volumique énergétique transportée. En outre, ce volume de solution 35 déconcentrée est plus léger que le même volume de solution 32 primaire.

Cette quantité de solution déconcentrée est transportée dans un réservoir 24 d'un camion 13 vers un site 11 de récupération, sur lequel elle peut être utilisée pour récupérer une énergie calorifique thermochimique lors d'une phase de récupération grâce à la pompe à chaleur 14 de récupération. Ce réservoir 24 peut être constitué du réservoir 36 de stockage de la solution déconcentrée sur le site de redistribution qui peut être déconnecté à cet effet de la conduite 82 pour être chargé sur le camion 13. De préférence, ce réservoir 24 est maintenu en dépression sous vide de tiers gaz.

Ainsi, un même camion 13 comprend un réservoir 24 qui permet d'une part de transporter ladite composition concentrée depuis un site 11 de récupération vers un site 12 de redistribution et, d'autre part, de transporter ladite solution déconcentrée depuis un site 12 de redistribution vers un site 11 de récupération.

Le réservoir 23 du camion 13 utilisé pour transporter le solvant liquide depuis un site 11 de récupération vers un site 12 de redistribution est vide lorsque le camion 13 retourne depuis le site de 12 de redistribution vers un site de récupération.

Il est à noter que, dans certains modes de réalisation possibles, il n'est pas nécessaire de charger et décharger les réservoirs 23, 24 du camion 13, ce dernier pouvant être utilisé à titre de dispositif réactionnel de la pompe à chaleur de redistribution, et être relié par des dispositifs de connexion pouvant être déconnectés à des échangeurs de chaleur du site de redistribution. Dans certains modes de réalisation le camion 13 peut même également incorporer au moins une partie des échangeurs de chaleur utiles sur le site de redistribution, de façon à limiter les opérations de connexion/déconnexion.

Tout dispositif de connexion pouvant être déconnecté peut être utilisé pour connecter ou déconnecté un réservoir en dépression sous vide de tiers gaz par rapport à une enceinte en dépression sous vide de tiers gaz d'une pompe à chaleur de redistribution ou de récupération. Par exemple, un tel dispositif de connexion comprend deux vannes dont l'une est reliée au réservoir tandis que l'autre est reliée à l'enceinte, un conduit reliant les deux vannes, et une pompe à vide associée à ce conduit permettant de faire le vide dans ce dernier avant ouverture des vannes.

L'évaporateur 26 de la station de redistribution d'énergie calorifique par voie thermochimique selon l'invention représentée figure 4 comprend un réservoir 46 clos contenant le solvant liquide pur à évaporer, dont le fond est en communication avec une conduite 47 dotée d'une pompe 48 et d'une vanne proportionnelle commandée 50 permettant d'extraire le liquide du réservoir 46 pour le faire passer dans un échangeur 49 de chaleur, dit échangeur 49 d'évaporateur, associé à la source chaude 27, qui est à une température supérieure à celle du solvant liquide pur extrait du réservoir 46. En conséquence, le solvant liquide se vaporise lors de son passage dans l'échangeur 49 d'évaporateur, dont la sortie est reliée en partie supérieure du réservoir 46, au-dessus du niveau du solvant liquide dans le réservoir 46, pour y délivrer le solvant ainsi vaporisé. Un capteur 51 de température permet de mesurer la température de la vapeur du solvant liquide à la sortie de l'échangeur 49 d'évaporateur.

Le dispositif 29 réactionnel comprend un réacteur 52 de condensation sous forme d'une enceinte close reliée à la partie supérieure du réservoir 46 par la conduite 30 de façon à pouvoir être alimentée par la vapeur du solvant à partir de l'évaporateur 26. La partie supérieure du réacteur 52 de condensation comprend un dispositif 55 de ruissellement relié à une conduite 54 d'alimentation en solution liquide. Ce dispositif 55 de ruissellement permet de créer un film tombant de la solution liquide à l'intérieur du réacteur 52 de condensation, au contact de la vapeur du solvant, entraînant de ce fait une condensation de cette vapeur, et son mélange avec la solution liquide, avec production de chaleur. Dans la partie inférieure du réacteur 52 de condensation, la solution liquide est donc à une moindre concentration et à une température plus élevée que la solution liquide à l'entrée du réacteur 52 de condensation. La solution liquide est extraite du réacteur 52 par une conduite 56.

Le dispositif 29 réactionnel comporte également un réacteur 57 de solubilisation qui est également sous forme d'une enceinte close et est adapté pour pouvoir être alimenté par des cristaux d'au moins un sel solide, par exemple disposés sur un tamis horizontal et/ou dans une matrice textile. Ce réacteur 57 de solubilisation comprend également en partie supérieure une alimentation 59 en solution liquide permettant l'écoulement de cette solution liquide au contact des cristaux de sel solide, et la solubilisation de ces derniers dans la solution liquide. Après solubilisation et production de chaleur, la solution liquide concentrée -notamment à la saturation- est extraite en partie inférieure du réacteur 57 de solubilisation par une conduite 60 comprenant une vanne proportionnelle commandée 69.

Les conduites 56 et 60 délivrant les solutions liquides en provenance respectivement des réacteurs 52 de condensation et 57 de solubilisation se rejoignent dans une conduite 61 commune dans laquelle les solutions liquides se mélangent, à l'entrée d'une pompe 62.

Le dispositif 29 réactionnel comprend également un réacteur 72 de recristallisation partielle, sous forme d'une enceinte close, qui comprend un échangeur 74 de chaleur comprenant un circuit froid alimenté en solvant liquide froid par une conduite 75 reliée à l'aval de la pompe 48 de sortie de l'évaporateur 26 par l'intermédiaire d'une vanne proportionnelle commandée 76. Après passage dans ce circuit froid dans lequel il se réchauffe, le solvant liquide est recyclé dans le réservoir 46 de l'évaporateur 26 par une conduite 78. Le réacteur 72 de recristallisation partielle comprend également en partie supérieure une alimentation 73 en solution liquide permettant l'écoulement de cette solution liquide au contact de l'échangeur 74 de chaleur (ou dans le circuit chaud de ce dernier), ce par quoi cette solution liquide se refroidit à une température suffisamment basse pour recristalliser partiellement. Les cristaux 37 ainsi formés sont récupérés en partie inférieure du réacteur 72 de recristallisation partielle, par exemple sur un tamis ou dans une matrice textile de ce dernier. La solution liquide déconcentrée ainsi formée dans le réacteur 72 de recristallisation partielle est extraite en partie inférieure de ce dernier par la conduite 82 comprenant une vanne commandée 83, cette conduite 82 débouchant dans le réservoir 36 dans lequel la solution liquide déconcentrée est stockée.

Une conduite 79 comprenant une vanne proportionnelle commandée 80 relie également la partie inférieure du réacteur 72 de recristallisation partielle à l'aval de la vanne 69 de sortie du réacteur 57 de solubilisation ou à la conduite 61 commune à l'amont de la pompe 62, de sorte que la solution liquide issue du réacteur 72 de recristallisation partielle peut être mélangée à la solution liquide issue du réacteur 52 de condensation.

Une première conduite 63 comprenant une vanne 66 proportionnelle commandée relie la sortie de la pompe 62 à un échangeur 81 de chaleur associé à la source froide 31 permettant un transfert de calories depuis la solution liquide délivrée par la pompe 62 vers la source froide 31, la sortie de cet échangeur 81 de chaleur délivrant une solution liquide refroidie. Cette solution liquide refroidie est alimentée dans le réacteur 52 de condensation par la conduite 54 qui relie la sortie de l'échangeur 81 de chaleur au réacteur 52 de condensation. Un capteur de température 53 permet de mesurer la température de la solution liquide circulant dans la conduite 54 entre l'échangeur 81 et le réacteur 52 de condensation.

Une deuxième conduite 64 comprenant une vanne 67 proportionnelle commandée relie la sortie de la pompe 62 à l'alimentation 59 du réacteur 57 de solubilisation. Une troisième conduite 65 comprenant une vanne 68 proportionnelle commandée relie la sortie de la pompe 62 à l'alimentation 73 du réacteur 72 de recristallisation partielle.

Dans l'état représenté figure 4, la station permet la solubilisation progressive des cristaux qui correspondent à la composition concentrée apportée par véhicule à la station, dans la quantité de solvant liquide pur correspondant à la quantité apportée par véhicule à la station, incorporée dans le réservoir 46 de l'évaporateur 26. L'évaporation du solvant liquide dans l'évaporateur 26 produit du froid utilisé dans l'échangeur 74 pour recristalliser partiellement au moins une partie de la solution liquide dans le réacteur 72 de recristallisation partielle qui produit une solution déconcentrée qui s'accumule, ainsi que les cristaux 37 ainsi formés, dans le réacteur 72 de recristallisation partielle. Le volume de la solution liquide alimentée dans le réacteur 72 de recristallisation partielle correspond par exemple avantageusement au volume de solvant liquide réintroduit par le réacteur 52 de condensation à partir de la vapeur produite par l'évaporateur 26.

Dans cet état, les vannes 50, 66, 67, 68, 69,76 sont ouvertes et la vanne 80 est fermée. La solution liquide formée dans la conduite commune 61 est la solution primaire qui présente une concentration Cf dont la valeur dépend de l'état respectif des vannes 66 et 67 permettant de réguler les débits délivrés respectivement au réacteur 52 de condensation et au réacteur 57 de solubilisation, et donc la puissance thermique délivrée, en fonction de la demande de la source chaude 27 et/ou de la source froide 31.

Une fois que tous les cristaux 39 ont été solubilisés dans le réacteur 57 de solubilisation et/ou que le réacteur 72 de recristallisation partielle a atteint sa capacité maximale en solution déconcentrée, cette dernière est évacuée dans le réservoir 36 par la conduite 82, la vanne commandée 83 étant ouverte.

Dans l'état représenté figure 5, la conduite commune 61 est alimentée non pas à partir du réacteur 57 de solubilisation, mais à partir du réacteur 72 de recristallisation partielle qui fait alors office de réacteur de solubilisation. Dans cet état, la vanne 69 est fermée et la vanne 80 est ouverte. La solution liquide formée dans la conduite commune 61 est la solution primaire dont la concentration Cf dépend de l'état respectif des vannes 66 et 68 permettant de réguler les débits délivrés respectivement au réacteur 52 de condensation et au réacteur 72 de recristallisation partielle. Ainsi, les cristaux 37 formés lors de la recristallisation partielle peuvent être recyclés immédiatement pour former la solution primaire, jusqu'à épuisement de ces cristaux 37.

Les différents réacteurs 52, 57, 72, le réservoir 46 de l'évaporateur, les échangeurs de chaleur 49, 81, le réservoir 36 de stockage de la solution déconcentrée et les différentes conduites qui les relient les uns aux autres sont en dépression sous vide de tiers gaz, c'est-à-dire sont en communication (selon l'état des vannes commandées) pour former une même enceinte close de laquelle tous les gaz présents avant mise en fonctionnement de l'installation sont évacués par une pompe à vide (non représenté).

Dans les modes de réalisation dans lesquels les réservoirs 23, 24 sont chargés/déchargés des camions, le premier réservoir 23 peut être utilisé à titre de réservoir 46 de l'évaporateur 26 de la station de redistribution. Il est apporté plein de solvant liquide en provenance d'une station de récupération, et remplace le réservoir 46 vide de la station de redistribution, ce réservoir vide étant chargé en remplacement sur le camion 13 à titre de premier réservoir 23.

Le deuxième réservoir 24 peut être utilisé à titre d'évaporateur 16 d'une station de récupération, puis à titre de réacteur 57 de solubilisation d'une station de redistribution. Ainsi lorsqu'un camion 13 arrive à une station de redistribution, le réservoir 24 est un évaporateur 16 contenant ladite composition concentrée, c'est à dire la composition saline cristallisée à l'état solide suite à l'évaporation de la solution déconcentrée dans une station de récupération. Ce réservoir 24 peut remplacer le réacteur 57 de solubilisation de la station de redistribution (après que ce dernier a été vidé de composition saline cristallisée lors d'une phase de redistribution). Ce réacteur 57 de solubilisation vide remplace le réservoir 36 de stockage plein de solution déconcentrée, ce dernier étant chargé sur le camion 13 à titre de deuxième réservoir 24.

Dans un procédé selon l'invention, on utilise de préférence une pluralité de camions 13 comprenant chacun deux réservoirs 23, 24 pour faire la navette entre chaque site de récupération et chaque site de redistribution.

Un automate qui, dans l'exemple représenté figure 4, est un dispositif informatique 85, est relié aux capteurs de température 51, 53 pour en recevoir les signaux de mesure et aux vannes 66, 67, 68, 76 pour pouvoir les commander, cet automate étant programmé selon un asservissement.

La commande de la vanne 67 permet d'ajuster le débit de composition saline introduite dans la solution liquide par la conduite 60 en sortie du réacteur 57 de solubilisation, et donc la concentration totale Cf de fonctionnement de la pompe à chaleur. Cette concentration totale Cf détermine le différentiel théorique de température procuré par la solution liquide.

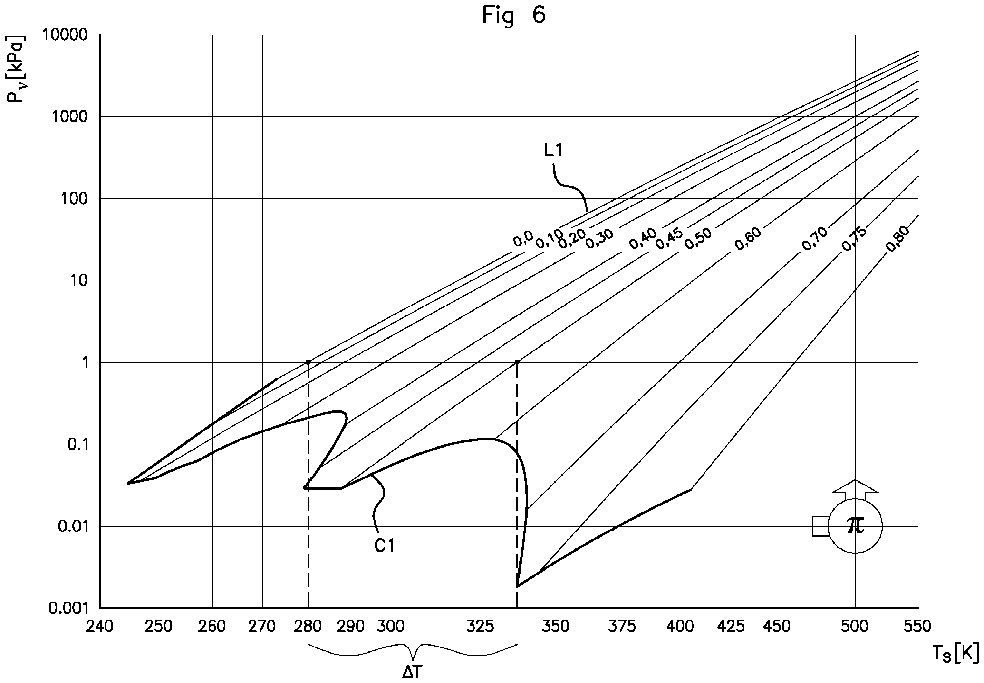

La figure 6 représente un diagramme de Othmer du logarithme de la pression de vapeur en fonction de la température des solutions aqueuses de soude. La courbe C1 est la courbe de cristallisation. Les différentes lignes qui s'étendent à partir de cette courbe de cristallisation correspondent aux différentes concentrations massiques des solutions aqueuses de soude, la ligne L1 située le plus à gauche correspondant à l'eau pure. Comme on le voit par exemple, par rapport à de l'eau pure à 280 K (7°C), le différentiel théorique de température ΔT présenté par une solution aqueuse de soude à 50 % est de 335 K -280 K = 55 K. Ce différentiel théorique de température est de 120 K pour une solution aqueuse de soude à 70 %. Ainsi, avec la soude, il est possible d'obtenir un différentiel théorique de température important.

Si la pompe à chaleur est utilisée pour le chauffage de la source froide 31 à une température de consigne prédéterminée, la température de la source chaude 27 et celle du solvant dans l'évaporateur 26 sont prédéterminées (ou considérées comme tels) et la valeur du différentiel théorique de température détermine la température de la solution liquide à la sortie du réacteur 52 de condensation, et donc la température de la solution liquide à l'entrée de l'échangeur 81 de refroidissement.

À débit constant, en augmentant cette température de la solution liquide à l'entrée de l'échangeur 81 de refroidissement, on augmente la puissance thermique fournie à la source froide 31. La température mesurée par le capteur 53 à la sortie de l'échangeur 81 de refroidissement est représentative, à un coefficient d'efficacité près, de la température de la source froide 31. Si cette température mesurée est inférieure à la température de consigne, l'automate 85 augmente l'ouverture de la vanne 67 pour augmenter le débit massique de composition saline injectée, et donc la température de la solution liquide à l'entrée de l'échangeur 81 de refroidissement. Si au contraire la température mesurée est supérieure à la température de consigne, l'automate 85 diminue l'ouverture de la vanne 67 pour diminuer le débit massique de composition saline injectée, et donc la température de la solution liquide à l'entrée de l'échangeur 81 de refroidissement.

La loi de commande utilisée pour l'augmentation ou la diminution de l'ouverture de la vanne 67 en fonction de la différence entre la température mesurée par le capteur 53 et la température de consigne peut faire l'objet de toutes variantes appropriées : il peut s'agir en particulier d'une loi de commande proportionnelle et/ou proportionnelle-dérivée et/ou proportionnelle-intégrale et/ou proportionnelle-intégrale-dérivée (PID) ou autre.

Il est à noter que l'échangeur 81 de refroidissement comprenant un circuit secondaire associé thermiquement à la source froide 31 isolé du circuit principal de cet échangeur 81 faisant partie de la pompe à chaleur, le capteur 53 de température peut être remplacé ou complété par un capteur de température à la sortie de ce circuit secondaire et/ou par un capteur de température de la source froide 31 de façon à procurer un ajustement plus précis vis-à-vis de la température de consigne de la source froide 31.

Il est par ailleurs à noter que la température de la solution liquide à l'entrée de l'échangeur 81 de refroidissement doit être supérieure à la température de consigne à laquelle la source froide 31 doit être portée. Il convient donc à ce titre de choisir la composition saline pour permettre de respecter cette condition. En particulier, l'utilisation de la soude permet en pratique de satisfaire cette condition par simple asservissement sur la température mesurée par le capteur 53, puisque, comme indiqué ci-dessus, le différentiel de température théorique pouvant être obtenu avec la soude peut être très important et aller jusqu'à 150° C.

La commande de la vanne 66 permet d'ajuster le débit de solution liquide en recirculation dans le réacteur 52 de condensation. De préférence, la vanne 66 est en conditions normales de fonctionnement, ouverte au maximum. Néanmoins, si la puissance requise diminue, il est possible de fermer la vanne 66 pour diminuer instantanément la puissance thermique fournie par la pompe à chaleur.

La commande de la vanne 68 permet d'ajuster le débit de solution liquide alimentée dans le réacteur 72 de recristallisation partielle. La commande de la vanne 76 permet d'ajuster le débit de solvant liquide utilisé pour le refroidissement du réacteur 72 de recristallisation partielle.

L'automate 85 est également relié aux pompes 62, 48 et programmé pour en commander la mise en fonctionnement ou l'arrêt, et à la vanne 50 permettant d'ajuster le débit de solvant liquide évaporé dans l'évaporateur 26. L'automate 85 est également relié aux vannes 69, 80 pour permettre un passage de l'état représenté figure 4 à l'état représenté figure 5 et vice versa.

L'automate 85 permet de réguler la température de cristallisation dans le réacteur 72 de recristallisation partielle par ajustement du débit de solvant liquide alimenté dans l'échangeur 74 de chaleur en commandant le degré d'ouverture de la vanne 76 en fonction de la température mesurée dans le réacteur 72 de recristallisation partielle grâce à un capteur de température (non représenté) dont les signaux sont délivrés à l'automate 85.

L'automate 85 permet également de réguler le niveau de solution liquide dans le dispositif 29 réactionnel en fonction de l'apport de solvant liquide issu de l'évaporateur 26, par contrôle du débit d'alimentation du réacteur 72 de recristallisation partielle en commandant le degré d'ouverture de la vanne 68 d'alimentation. Pour ce faire, il est prévu avantageusement au moins un capteur de niveau (non représenté) de la solution liquide dans le dispositif 29 réactionnel, l'automate 85 recevant les signaux délivrés par chaque capteur de niveau et étant adapté pour maintenir le niveau de liquide.

Si la pompe à chaleur est utilisée pour le refroidissement de la source chaude 27 à une température de consigne prédéterminée, la température de la source froide 31 et celle de la solution liquide à la sortie du réacteur 52 de condensation sont prédéterminées (ou considérées comme tels) et la valeur du différentiel théorique de température détermine la température du solvant liquide dans l'évaporateur 26 à l'entrée de l'échangeur 49 d'évaporateur.

À débit constant, en diminuant cette température du solvant liquide à l'entrée de l'échangeur 49 d'évaporateur, on augmente la puissance thermique fournie par la source chaude 27 à l'échangeur 49 d'évaporateur. Si la température de la vapeur à la sortie de l'échangeur 49 d'évaporateur mesurée par le capteur 51 est inférieure à la température de consigne, l'automate 85 diminue l'ouverture de la vanne 67 pour diminuer le débit massique de composition saline injectée, et donc augmenter la température du solvant liquide à l'entrée de l'échangeur 49 d'évaporateur. Si au contraire la température mesurée par le capteur 51 est supérieure à la température de consigne, l'automate 85 augmente l'ouverture de la vanne 67 pour augmenter le débit massique de composition saline injectée, et donc diminuer la température du solvant liquide à l'entrée de l'échangeur 49 d'évaporateur.

La loi de commande utilisée pour l'augmentation ou la diminution de l'ouverture de la vanne 67 en fonction de la différence entre la température mesurée par le capteur 51 et la température de consigne peut faire l'objet de toutes variantes appropriées : il peut s'agir en particulier d'une loi de commande proportionnelle et/ou proportionnelle-dérivée et/ou proportionnelle-intégrale et/ou proportionnelle-intégrale-dérivée (PID) ou autre.

Il est par ailleurs à noter que la température du solvant liquide à l'entrée de l'échangeur 49 d'évaporateur doit être inférieure à la température de consigne à laquelle la source chaude 27 doit être portée. Il convient donc à ce titre de choisir la composition saline pour permettre de respecter cette condition. En particulier, l'utilisation de la soude permet en pratique de satisfaire cette condition par simple asservissement sur la température mesurée par le capteur 51, puisque, comme indiqué ci-dessus, le différentiel théorique de température pouvant être obtenu avec la soude peut être très important et aller jusqu'à 150° C.

La commande de la vanne 50 à l'entrée de l'échangeur 49 d'évaporateur permet d'ajuster le débit de solvant liquide en circulation dans cet échangeur 49 d'évaporateur. De préférence, la vanne 50 est en conditions normales de fonctionnement, ouverte au maximum. Néanmoins, si la puissance requise diminue, il est possible de fermer la vanne 50 pour diminuer instantanément la puissance thermique fournie par la pompe à chaleur.

Comme précédemment indiqué en ce qui concerne la source froide 31, le capteur 51 de température peut être remplacé ou complété par un capteur de température à la sortie du circuit secondaire de l'échangeur 49 d'évaporateur et/ou par un capteur de température de la source chaude 27.

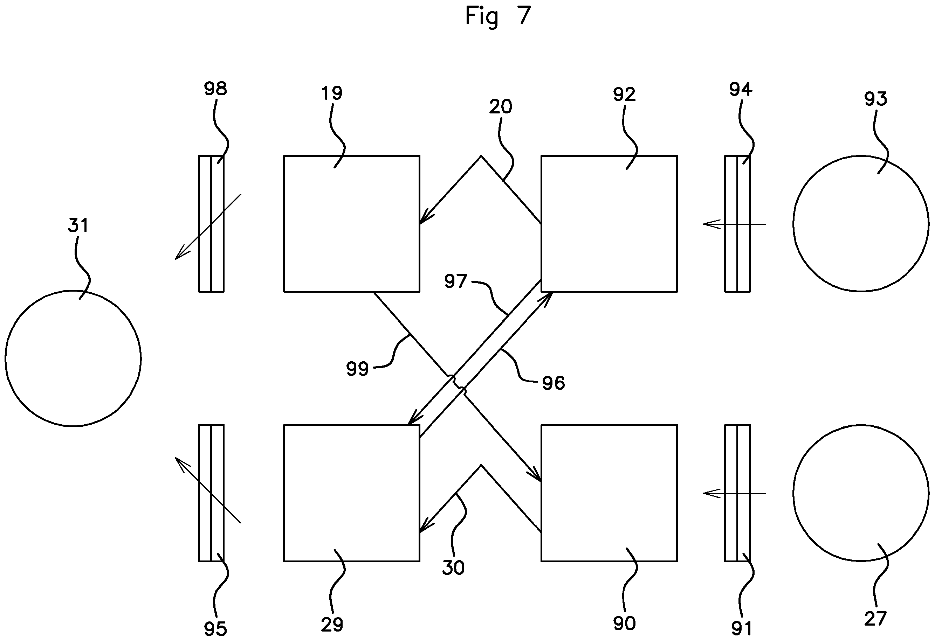

Dans le mode de réalisation de la figure 7, la station de redistribution d'énergie calorifique selon l'invention fait également office de station de récupération d'énergie calorifique.

Cette station comprend un évaporateur 90 de redistribution associé à la source chaude 27 par un échangeur de chaleur 91, et un évaporateur 92 de récupération associé à une source 93 de chaleur à récupérer par un échangeur de chaleur 94.

Comme dans le mode de réalisation de la figure 3, cette station comprend un dispositif 29 réactionnel de redistribution alimenté, lors d'une phase de redistribution, en vapeur produite par l'évaporateur 90 par une conduite 30 et associé à la source froide 31 via un échangeur de chaleur 95. Ce dispositif 29 réactionnel délivre la solution primaire dont au moins une partie peut être recristallisée grâce au froid produit par l'évaporateur 90 de redistribution, en produisant une quantité de sel recristallisé et une solution déconcentrée, qui peut être alimentée vers l'évaporateur 92 de récupération par une conduite 96. La composition concentrée produite par l'évaporateur 92 de récupération est de préférence à l'état liquide et peut être délivrée au dispositif 29 réactionnel par une conduite 97. Le condenseur 19 de récupération est associé à la source froide 31 par un échangeur de chaleur 98. Le solvant liquide produit par le condenseur 19 de récupération peut être alimenté à l'évaporateur 90 de redistribution par une conduite 99.

Lors d'une phase de récupération, l'énergie calorifique est récupérée par l'évaporateur 92 de récupération pour évaporer le solvant de la solution déconcentrée. Le condenseur 19 délivre la chaleur de condensation à la source froide 31, et le solvant liquide condensé à l'évaporateur 90 de redistribution. L'évaporation de la solution déconcentrée dans l'évaporateur 92 de récupération produit une composition concentrée en sel(s).

Lors d'une phase de redistribution, le solvant liquide alimenté dans l'évaporateur 90 de redistribution est évaporé pour former la vapeur introduite dans le dispositif 29 réactionnel de redistribution. La composition reconcentrée produite par l'évaporateur 92 de récupération lors de la récupération est utilisée dans le dispositif 29 réactionnel pour former la solution primaire 32. De même, la composition concentrée (recristallisée) produite lors de la recristallisation partielle est utilisée par le dispositif 29 réactionnel pour former la solution primaire 32.

Là encore, l'ensemble de l'installation est placé en dépression sous vide de tiers gaz avant son démarrage.

Les différentes vannes commandées peuvent être par exemple des électrovannes proportionnelles commandées par un automatisme programmé de façon bien connue en soi pour réaliser les fonctions techniques mentionnées ci-dessus, notamment selon des asservissements appropriés en boucle fermée ou non, à partir de capteurs de mesure, notamment de capteurs de température et/ou thermostats et/ou de capteurs de niveau de liquide dans les réservoirs ou réacteurs et/ou de capteurs de détection de la présence de composition solide dans les réacteurs ou autres.

### Exemple :

En prenant l'eau comme solvant liquide et l'hydroxyde de sodium (NaOH) comme sel, avec une absorption de chaleur de 40 kW par l'évaporateur 26 de solvant, le réacteur 72 de recristallisation partielle étant alimenté par un débit de 0,03 L/s de solution primaire à une concentration massique Cf de 60 %, le solvant liquide prélevé du réservoir 46 de l'évaporateur 26 et alimenté à l'entrée de l'échangeur 74 de chaleur du réacteur 72 de recristallisation partielle étant à une température de 5°C, le réacteur 72 de recristallisation partielle produit d'une part 24 g/s de cristaux d'hydroxyde de sodium monohydraté, c'est-à-dire à une concentration massique de environ 70 %, formant la composition reconcentrée à une température de 5°C, d'autre part un débit de 0,016 L/s de solution déconcentrée présentant une concentration massique de 50 % à une température de 5°C.

Ainsi, la quantité d'eau transportée, et donc d'énergie transportée, avec une telle solution déconcentrée est supérieure de 25 % à celle de la solution primaire. Par exemple, avec un réservoir 24 de 10t de capacité, l'invention permet de transporter 1t de plus d'eau.

L'invention peut faire l'objet de nombreuses variantes et applications autres que celles décrites ci-dessus. En particulier, il va de soi que, sauf indication contraire explicite, les différentes caractéristiques structurelles et/ou fonctionnelles de chacun des modes de réalisation décrits ci-dessus ne doivent pas être considérées comme combinées et/ou étroitement liées les unes aux autres, mais au contraire comme de simples juxtapositions. En outre, les caractéristiques structurelles ou fonctionnelles des différents modes de réalisation décrits ci-dessus peuvent faire l'objet en tout ou partie de toute juxtaposition différente ou de toute combinaison différente.

Par exemple, les pompes à chaleur peuvent être placées non pas en dépression sous vide de tiers gaz, mais à une pression supérieure, en contenant un gaz neutre tel que de l'air ou autre, si cette pression est compatible avec les phénomènes d'évaporation mis en jeu, compte tenu des caractéristiques thermiques des sources de chaleur associées aux évaporateurs. En outre, les différents dispositifs de condensation, solubilisation, d'échange calorifique... peuvent faire l'objet de toutes variantes structurelles et optimisations bien connues en elles-mêmes, de façon à exercer leurs fonctions techniques mentionnées ci-dessus.

## Revendications

1. - Procédé de récupération/redistribution d'énergie calorifique par voie thermochimique dans lequel, lors d'une phase de redistribution d'énergie calorifique, sur au moins un site, dit site (12) de redistribution, une solution liquide, dite solution primaire (32), comprenant une composition, dite composition saline, d'au moins un sel en solution dans un solvant liquide, est formée à une concentration totale Cf,
**caractérisé en ce que** :
- ladite phase de redistribution d'énergie calorifique comprend une étape de séparation partielle lors de laquelle au moins une partie de la solution primaire (32) formée sur ledit au moins un site (12) de redistribution est ensuite soumise sur ledit site de redistribution à au moins une séparation partielle produisant sans consommation d'énergie extérieure
∘ une solution liquide, dite solution déconcentrée (35), ayant une concentration totale Cd non nulle inférieure à Cf,
∘ une composition, dite composition concentrée (37), ayant une concentration totale supérieure à Cf,
∘ et **en ce que** la solution déconcentrée produite est utilisée lors d'une phase de récupération d'énergie calorifique.

2. - Procédé selon la revendication 1 **caractérisé en ce que** ladite composition concentrée (37) est stockée sur ledit site (12) de redistribution.

3. - Procédé selon l'une quelconque des revendications 1 ou 2 **caractérisé en ce que** ladite composition concentrée (37) est au moins pour partie recyclée lors d'une phase de redistribution d'énergie calorifique pour former ladite solution primaire (32) sur ledit site (12) de redistribution.

4. - Procédé selon l'une des revendications 1 à 3 **caractérisé en ce que** l'étape de séparation partielle est une étape de recristallisation partielle de ladite solution primaire (32).

5. - Procédé selon l'une des revendications 1 à 4 **caractérisé en ce que** :
- pour former ladite solution primaire (32) :
∘ on choisit un solvant liquide (28) volatile,
∘ ledit solvant liquide (28) est évaporé dans un évaporateur (26, 90) en dépression sous vide de tiers gaz avec production de froid,
∘ la vapeur du solvant délivrée par l'évaporateur est alimentée dans un dispositif (29) réactionnel dans lequel elle est condensée et incorporée dans ladite solution primaire (32),
- ladite solution déconcentrée (35) est formée lors de l'étape de séparation partielle par refroidissement et recristallisation (34) partielle de ladite solution primaire (32) à partir de froid produit par l'évaporateur (26, 90).

6. - Procédé selon l'une des revendications 1 à 5 **caractérisé en ce que** la solution déconcentrée (35) est transportée par véhicules (13) depuis ledit site (12) de redistribution vers au moins un site, dit site (11) de récupération, distant de ce site (12) de redistribution.

7. - Procédé selon l'une des revendications 1 à 6 **caractérisé en ce que** lors d'une phase de récupération d'énergie calorifique, de l'énergie calorifique est récupérée par évaporation de solvant de ladite solution déconcentrée.

8. - Procédé selon l'une des revendications 1 à 7 **caractérisé en ce que** lors d'une phase de récupération d'énergie calorifique sur au moins un site (11) de récupération :
- ladite solution déconcentrée (35) est évaporée par absorption de chaleur en provenance d'une source de chaleur (17) de façon à produire une vapeur dudit solvant et une composition, dite composition reconcentrée, ayant une concentration totale supérieure à Cd -notamment supérieure à Cf-,
- ladite vapeur du solvant est condensée pour produire ledit solvant liquide,
- ledit solvant liquide et ladite composition reconcentrée ainsi formés sur un site de récupération sont transportés sur au moins un site de redistribution.

9. - Procédé selon l'une des revendications 1 à 8 **caractérisé en ce que** ledit solvant liquide est l'eau et ladite composition saline comporte un unique sel soluble dans l'eau.

10. - Procédé selon la revendication 9 **caractérisé en ce que** le sel est l'hydroxyde de sodium.

11. - Station de redistribution d'énergie calorifique par voie thermochimique apte à être située sur un site, dit site de redistribution, comprenant un dispositif, dit dispositif (29) réactionnel, apte à former, lors d'une phase de redistribution d'énergie calorifique, une solution liquide, dite solution primaire (32), comprenant une composition, dite composition saline, d'au moins un sel en solution dans un solvant liquide à une concentration totale Cf,
**caractérisée en ce qu'**elle comprend un dispositif, dit dispositif (34, 72) de séparation partielle, relié au dispositif (29) réactionnel pour pouvoir recevoir au moins une partie de ladite solution primaire (32), et adapté pour pouvoir produire à partir de cette solution primaire sans consommation d'énergie extérieure :
- une solution liquide, dite solution déconcentrée (35), à une concentration totale Cd non nulle inférieure à Cf,
- une composition, dite composition concentrée (37), ayant une concentration totale supérieure à Cf.

12. - Station selon la revendication 11 **caractérisée en ce qu'**elle comprend un dispositif de stockage de ladite solution déconcentrée.

13. - Station selon la revendication 12 **caractérisée en ce que** le dispositif (43) de stockage est adapté pour permettre le chargement d'au moins un véhicule (13) de transport par une quantité de ladite solution déconcentrée, en vue de son transport depuis ledit site (12) de redistribution vers au moins un site, dit site (11) de récupération, distant dudit site (12) de redistribution.

14. - Station selon l'une des revendications 11 à 13 **caractérisée en ce que** le dispositif (34, 72) de séparation partielle est un dispositif de recristallisation partielle sur ledit site (12) de redistribution d'au moins une partie de ladite solution primaire (32), ce dispositif de recristallisation partielle étant apte à produire sur ledit site (12) de redistribution, à partir d'au moins une partie de ladite solution primaire, ladite solution déconcentrée, et ladite composition concentrée sous forme d'une composition solide recristallisée.

15. - Station selon la revendication 14 **caractérisée en ce que** :
- elle comprend un évaporateur (26, 90) en dépression sous vide de tiers gaz adapté pour être alimenté par ledit solvant liquide et pour délivrer une vapeur de ce solvant avec production de froid,
- le dispositif de recristallisation partielle comprend un dispositif d'échange calorifique adapté pour soumettre ladite solution primaire (32) au froid produit par l'évaporateur (26, 90) de façon à former ladite solution déconcentrée par refroidissement et recristallisation partielle.

16. - Dispositif de récupération/redistribution d'énergie calorifique par voie thermochimique **caractérisé en ce qu'**il comprend au moins une station de redistribution selon l'une des revendications 11 à 15 et au moins une station, dite station de récupération, thermochimique de récupération d'énergie calorifique, comprenant:
- un évaporateur (16) associé en échange calorifique à une source (17) de chaleur, cet évaporateur (16) étant adapté pour pouvoir être alimenté par ladite solution déconcentrée, et pour pouvoir produire une vapeur dudit solvant et une composition, dite composition reconcentrée, ayant une concentration totale supérieure à Cf, avec absorption de chaleur en provenance de ladite source (17) de chaleur,
- un condenseur (19) adapté pour pouvoir être alimenté par ladite vapeur et produire ledit solvant liquide.

## Patentansprüche

1. Verfahren zur Rückgewinnung/Umverteilung thermischer Energie auf thermochemischem Weg, wobei während einer Phase der Umverteilung von thermischer Energie an mindestens einem Standort, bezeichnet als Umverteilungsstandort (12), eine flüssige Lösung, bezeichnet als Primärlösung (32), die eine Zusammensetzung, bezeichnet als Salzzusammensetzung, aus mindestens einem in einem flüssigen Lösungsmittel gelösten Salz umfasst, in einer Gesamtkonzentration Cf gebildet wird,
**dadurch gekennzeichnet, dass**:
- die Phase der Umverteilung thermischer Energie einen Schritt der partiellen Trennung umfasst, bei dem mindestens ein Teil der an einem Umverteilungsstandort (12) gebildeten Primärlösung (32) anschließend an diesem Umverteilungsstandort mindestens einer partiellen Trennung unterzogen wird, die ohne Verbrauch von Fremdenergie erzeugt:
∘ eine flüssige Lösung, bezeichnet als dekonzentrierte Lösung (35), mit einer Gesamtkonzentration Cd ungleich Null unter Cf,
∘ eine Zusammensetzung, bezeichnet als konzentrierte Zusammensetzung (37), mit einer Gesamtkonzentration über Cf,
∘ und dadurch, dass die erzeugte dekonzentrierte Lösung während einer Phase der Rückgewinnung thermischer Energie verwendet wird.

2. Verfahren nach Anspruch 1, **dadurch gekennzeichnet, dass** die konzentrierte Zusammensetzung (37) am Umverteilungsstandort (12) gelagert wird.

3. Verfahren nach einem der Ansprüche 1 oder 2, **dadurch gekennzeichnet, dass** die konzentrierte Zusammensetzung (37) mindestens teilweise während einer Phase der Umverteilung thermischer Energie zur Bildung der Primärlösung (32) am Umverteilungsstandort (12) wiederverwendet wird.

4. Verfahren nach einem der Ansprüche 1 bis 3, **dadurch gekennzeichnet, dass** der Schritt der partiellen Trennung ein Schritt der partiellen Rekristallisation der Primärlösung (32) ist.

5. Verfahren nach einem der Ansprüche 1 bis 4, **dadurch gekennzeichnet, dass**:
- zur Bildung der Primärlösung (32):
∘ ein flüchtiges flüssiges Lösungsmittel (28) gewählt wird,
∘ das flüssige Lösungsmittel (28) in einem Drittgas-Vakuum-Unterdruck-Verdampfer (26, 90) mit Kälteerzeugung verdampft wird,
∘ der von dem Verdampfer abgegebene Dampf des Lösungsmittels in eine Reaktionsvorrichtung (29) eingespeist wird, in der er kondensiert und in die Primärlösung (32) eingearbeitet wird,
- die dekonzentrierte Lösung (35) während des Schritts der partiellen Trennung durch Kühlen und partiellen Rekristallisation (34) der Primärlösung (32) aus der vom Verdampfer (26, 90) erzeugten Kälte gebildet wird.

6. Verfahren nach einem der Ansprüche 1 bis 5, **dadurch gekennzeichnet, dass** die dekonzentrierte Lösung (35) mit Fahrzeugen (13) vom Umverteilungsstandort (12) zu mindestens einem Standort, bezeichnet als Rückgewinnungsstandort (11), transportiert wird, der von diesem Umverteilungsstandort (12) entfernt ist.

7. Verfahren nach einem der Ansprüche 1 bis 6, **dadurch gekennzeichnet, dass** während einer Phase der Rückgewinnung thermischer Energie thermische Energie durch Verdampfen von Lösungsmittel aus der dekonzentrierten Lösung zurückgewonnen wird.

8. Verfahren nach einem der Ansprüche 1 bis 7, **dadurch gekennzeichnet, dass** während einer Phase der Rückgewinnung thermischer Energie an mindestens einem Rückgewinnungsstandort (11):
- die dekonzentrierte Lösung (35) durch Absorption von Wärme aus einer Wärmequelle (17) derart verdampft wird, dass ein Dampf des Lösungsmittels und eine Zusammensetzung, bezeichnet als rekonzentrierte Zusammensetzung, mit einer Gesamtkonzentration über Cd - insbesondere über Cf - erzeugt wird,
- der Dampf des Lösungsmittels kondensiert wird, um das flüssige Lösungsmittel zu erzeugen,
- das flüssige Lösungsmittel und die rekonzentrierte Zusammensetzung, die auf diese Weise an einem Rückgewinnungsstandort gebildet wurden, an mindestens einen Umverteilungsstandort transportiert werden.

9. Verfahren nach einem der Ansprüche 1 bis 8, **dadurch gekennzeichnet, dass** das flüssige Lösungsmittel Wasser ist und die Salzzusammensetzung ein einziges wasserlösliches Salz umfasst.

10. Verfahren nach Anspruch 9, **dadurch gekennzeichnet, dass** das Salz Natriumhydroxid ist.

11. Station zur Umverteilung thermischer Energie auf thermochemischem Weg, die imstande ist, sich an einem Standort, bezeichnet als Umverteilungsstandort, zu befinden, umfassend eine Vorrichtung, bezeichnet als Reaktionsvorrichtung (29), die imstande ist, während einer Phase der Umverteilung thermischer Energie eine flüssige Lösung, bezeichnet als Primärlösung (32), zu bilden, die eine Zusammensetzung, bezeichnet als Salzzusammensetzung, aus mindestens einem in einem flüssigen Lösungsmittel gelösten Salz in einer Gesamtkonzentration Cf umfasst,
**dadurch gekennzeichnet, dass** sie eine Vorrichtung, bezeichnet als Vorrichtung (34, 72) zur partiellen Trennung, umfasst, die mit der Reaktionsvorrichtung (29) verbunden ist, um mindestens einen Teil der Primärlösung (32) aufnehmen zu können, und die geeignet ist, aus dieser Primärlösung ohne Verbrauch von Fremdenergie zu erzeugen:
- eine flüssige Lösung, bezeichnet als dekonzentrierte Lösung (35), mit einer Gesamtkonzentration Cd ungleich Null unter Cf,
- eine Zusammensetzung, bezeichnet als konzentrierte Zusammensetzung (37), mit einer Gesamtkonzentration über Cf.

12. Station nach Anspruch 11, **dadurch gekennzeichnet, dass** sie eine Vorrichtung zur Lagerung der dekonzentrierten Lösung umfasst.

13. Station nach Anspruch 12, **dadurch gekennzeichnet, dass** die Lagervorrichtung (43) geeignet ist, die Beladung mindestens eines Transportfahrzeugs (13) mit einer Menge der dekonzentrierten Lösung zu ermöglichen, um sie vom Umverteilungsstandort (12) an mindestens einen Standort, bezeichnet als Rückgewinnungsstandort (11), zu transportieren, die vom Umverteilungsstandort (12) entfernt ist.

14. Station nach einem der Ansprüche 11 bis 13, **dadurch gekennzeichnet, dass** die Vorrichtung (34, 72) zur partiellen Trennung eine Vorrichtung zur partiellen Rekristallisation am Umverteilungsstandort (12) mindestens eines Teils der Primärlösung (32) ist, wobei diese Vorrichtung zur partiellen Rekristallisation geeignet ist, am Umverteilungsstandort (12) aus mindestens einem Teil der Primärlösung die dekonzentrierte Lösung und die konzentrierte Zusammensetzung in Form einer festen rekristallisierten Zusammensetzung zu erzeugen.

15. Station nach Anspruch 14, **dadurch gekennzeichnet, dass**:
- sie einen Drittgas-Vakuum-Unterdruck-Verdampfer (26, 90) umfasst, der geeignet ist, mit dem flüssigen Lösungsmittel versorgt zu werden und einen Dampf dieses Lösungsmittels unter Kälteerzeugung abzugeben,
- die Vorrichtung zur partiellen Rekristallisation eine Wärmetauschvorrichtung umfasst, die geeignet ist, die Primärlösung (32) der von dem Verdampfer (26, 90) erzeugten Kälte derart auszusetzen, dass die dekonzentrierte Lösung durch Kühlung und partielle Rekristallisation gebildet wird.

16. Vorrichtung zur Rückgewinnung/Umverteilung thermischer Energie auf thermochemischem Weg, **dadurch gekennzeichnet, dass** sie mindestens eine Umverteilungsstation nach einem der Ansprüche 11 bis 15 und mindestens eine thermochemische Station zur Rückgewinnung thermischer Energie, bezeichnet als Rückgewinnungsstation, umfasst, umfassend:
- einen Verdampfer (16), der im Wärmeaustausch mit einer Wärmequelle (17) verbunden ist, wobei dieser Verdampfer (16) geeignet ist, mit der dekonzentrierten Lösung versorgt zu werden und einen Dampf des Lösungsmittels und eine Zusammensetzung, bezeichnet als rekonzentrierte Zusammensetzung, mit einer Gesamtkonzentration über Cf mit Absorption von Wärme aus der Wärmequelle (17) zu erzeugen,
- einen Kondensator (19), der geeignet ist, mit dem Dampf versorgt zu werden und das flüssige Lösungsmittel zu erzeugen.

## Claims

1. - A method of recovery/redistribution of heat energy by thermo-chemical means wherein, during a phase of redistribution of heat energy on at least one site, called redistribution site (12), a liquid solution, called primary solution (32), comprising a saline composition, of at least one salt in solution in a liquid solvent, is formed at a total concentration Cf,
characterized is that:
- said phase of heat energy redistribution comprises a step of partial separation during which at least one part of the primary solution (32) formed on said at least one redistribution site (12) is then subject on said at redistribution site
to at least a partial separation producing without consumption of external energy
∘ a liquid solution, called deconcentrated solution (35) having a total non-zero concentration Cd less than Cf,
∘ a composition, called concentrated composition (37) having a total concentration greater than Cf,
∘ and in that the deconcentrated solution produced is used during a heat energy recovery phase.

2. - The method according to claim 1 **characterized in that** said concentrated composition (37) is stored on said redistribution site (12).

3. - The method according to any of claims 1 or 2 **characterized in that** said concentrated composition (37) is at least for a part, recycled during the heat energy redistribution phase for forming said primary solution (32) on said redistribution site (12).

4. - The method according to one of claims 1 to 3 **characterized in that** the partial separation step is a step of partial recrystallization of said primary solution (32).

5. - The method according to one of claims 1 to 4 **characterized in that**:
- for forming said primary solution (32):
∘ a volatile liquid solvent (28) is chosen,
∘ said liquid solvent (28) is evaporated in an evaporator (26, 90) at reduced pressure under vacuum with a third gas with production of cold,
∘ the solvent vapor delivered by the evaporator being fed into a reaction system (29) in which said vapor is condensed and incorporated into said primary solution (32),
- said deconcentrated solution (35) being formed during the step of partial separation by cooling and partial recrystallization (34) of said solution (32) starting from the cold produced by the evaporator (26, 90).

6. - The method according to one of claims 1 to 5 **characterized in that** the deconcentrated solution (35) is transported by vehicles (13) from said redistribution site (12) to at least one site, called recovery site (11), distant from said redistribution site (12).

7. - The method according to one of claims 1 to 6 **characterized in that** during a heat energy recovery phase, the heat energy is recovered by evaporation of solvent of said deconcentrated solution.

8. - The method according to one of claims 1 to 7 **characterized in that** during a heat energy recovery phase on at least one recovery site (11):
- said deconcentrated solution (35) is evaporated by absorption of heat coming from a heat source (17) so as to produce a vapor from said solvent and a composition, said reconcentrated composition having a total concentration greater than Cd - in particular greater than Cf -,
- said vapor of the solvent is condensed to produce said liquid solvent,
- said liquid solvent and said reconcentrated composition thereby formed on a recovery site are transported to at least one redistribution site.

9. - The method according to one of claims 1 to 8 **characterized in that** said liquid solvent is water and said saline composition includes a single salt soluble in water.

10. - The method according to claim 9 **characterized in that** the salt is sodium hydroxide.

11. - A heat energy redistribution station by thermo-chemical means apt to be situated on a site, called a redistribution site, comprising a system, called reaction system (29) apt to form during the heat energy redistribution phase, a liquid solution, called a primary solution (32) comprising a composition, called a saline composition, of at least one salt in solution in a liquid solvent at a concentration Cf,
**characterized in that** same comprises a system, called system (34, 72) of partial separation, related to the reaction system (29) so as to be able to receive at least a part of said primary solution (32) and suitable for producing from the primary solution without consumption of external energy:
- a liquid solution, called deconcentrated solution (35), at a total non-zero concentration Cd less than Cf,
- a composition, called concentrated composition (37) having a total concentration greater than Cf.

12. - The station according to claim 11 **characterized in that** same comprises a storage system for said deconcentrated solution.

13. - The station according to claim 12 **characterized in that** the storage system (43) is suitable for allowing at least one transport vehicle (13) to be loaded with a quantity of said deconcentrated solution, in preparation for the transport thereof from said redistribution site (12) to at least one site, called recovery site (11) distant from said redistribution site (12).

14. - The station according to one of claims 11 to 13 **characterized in that** the partial separation system (34, 72) is a partial recrystallization system on said redistribution site (12) of at least a part of said primary solution (32), the partial recrystallization system being apt to produce on said redistribution site (12), from at least one part of said primary solution, said deconcentrated solution and said concentrated composition in the form of a recrystallized solid composition.

15. - The station according to claim 14 **characterized in that**:
- same comprises an evaporator (26, 90) at reduced pressure under vacuum of a third gas suitable for being supplied by said liquid solvent and for delivering a vapor of the solvent with the production of cold,
- the partial recrystallization system comprises a heat exchange system suitable for subjecting said primary solution (32) to cold produced by the evaporator (26, 90) so as to form said deconcentrated solution by cooling and partial recrystallization.

16. - A heat energy recovery/redistribution system by thermo-chemical means **characterized in that** same comprises at least one redistribution station according to one of claims 11 to 15 and at least one station, called thermo-chemical heat energy recovery station, comprising:
- an evaporator (16) associated by heat exchange with a heat source (17), the evaporator (16) being suitable for being fed with said deconcentrated solution and for producing a vapor of said solvent and a composition, called reconcentrated composition having a total concentration greater than Cf, with the absorption of heat coming from said heat source (17),
- a condenser (19) suitable for being fed with said vapor and for producing said liquid solvent.
